# EUROPÄISCHE PATENTSCHRIFT

(11) **EP 0 667 264 B1**
(45) Veröffentlichungstag und Bekanntmachung des Hinweises auf die Patenterteilung: **13.08.1997**
(21) Anmeldenummer: 95100367.2
(22) Anmeldetag: 12.01.1995
(51) Int. Cl.: B60R 22/40

(54) **Trägheitssensor**
Inertia sensor
Capteur inertiel

(30) Priorität: 11.02.1994 DE 9402320 U
(43) Veröffentlichungstag der Anmeldung: 16.08.1995
(73) Patentinhaber: TRW Occupant Restraint Systems GmbH, 73553 Alfdorf (DE)
(72) Erfinder: Kielwein, Thomas, D-73569 Eschach (DE)
(74) Vertreter: Degwert, Hartmut, Dipl.-Phys.

(56) Entgegenhaltungen:
- EP-A- 0 078 204
- EP-A- 0 351 551
- DE-A- 3 302 303
- DE-A- 4 109 179
- GB-A- 2 010 071
- US-A- 3 901 461
- US-A- 4 063 695
- US-A- 4 844 374
- US-A- 4 936 601

## Beschreibung

Die Erfindung betrifft einen Trägheitssensor nach dem Oberbegriff des Patentanspruchs.

Ein solcher Trägheitssensor spricht auf Verzögerung und Beschleunigung eines Fahrzeugs, aber auch auf eine Schrägstellung des Fahrzeugaufbaus gegenüber der Horizontalen an. Die normale Bezugsebene der Schale, in welcher die Kugel ruht, ist horizontal. Wenn sich die Kugel in ihrer Schale verlagert, drückt sie den Sensorhebel hoch in Richtung der Außenverzahnung der Steuerscheibe am Gurtaufroller. Damit die Klinke am freien Ende der Steuerklinke in die Verzahnung der Steuerscheibe eingreifen kann, muß der Sensorhebel einen Hub bestimmter Größe ausführen. Üblicherweise liegt die Hubrichtung in der Ebene der Steuerscheibe, also in einer senkrechten Ebene.

In vielen Fällen wird jedoch der Gurtaufroller geneigt im Fahrzeug eingebaut. Da die Ruheebene für die Kugel des Trägheitssensors weiterhin horizontal sein muß, wird der gesamte Trägheitssensor entsprechend geneigt zum Gurtaufroller angeordnet. Die Ebene der Steuerscheibe ist dann nicht vertikal, sondern gegenüber einer Vertikalebene geneigt. Die Hubrichtung des Sensorhebels liegt in diesem Falle nicht in der Ebene der Steuerscheibe. Für die Einsteuerung der Steuerklinke in die Verzahnung der Steuerscheibe wird ein größerer Hub benötigt. Durch den vergrößerten Hub der Steuerklinke wird nicht nur mehr Bauraum benötigt, sondern vor allem auch die Ansprechzeit bis zur Einleitung des Sperrvorgangs vergrößert. Diesen Mängeln kann durch eine Ausbildung der Steuerscheibe mit schräger Verzahnung begegnet werden. Für unterschiedliche Neigungswinkel des Gurtaufrollers müssen entsprechend viele Spezialausführungen von Steuerscheiben bereitgestellt werden. Dies führt zu einem erhöhten Fertigungsaufwand und höheren Herstellungskosten.

Ein gattungsgemäßer Trägheitssensor ist bereits aus der US-A-3 901 461 bekannt. Bei diesem Trägheitssensor ist die Schwenkachse des Sensorhebels gegen die Bezugsebene in gleichem Sinne wie die Ebene der Steuerscheibe geneigt. Dadurch erfolgt der Hub des Sensorhebels mit einer vergrößerten, zur Außenverzahnung der Steuerscheibe gerichteten Komponente. Die Kugel wirkt für den darauf aufliegenden Teil des Sensorhebels wie eine Rampe, durch die diese Hubkomponente vergrößert wird. Der mit dem bekannten Trägheitssensor ausgestattete Gurtaufroller kann jedoch maximal nur um etwa 30° geneigt eingebaut werden, da die Kugel in dieser Lage bereits den äußeren Rand einer sie auf einer Seite lagernden Schale erreicht hat.

Durch die Erfindung soll ein Trägheitssensor mit den Merkmalen des einzigen Anspruchs bereitgestellt werden, mit dem trotz geneigter Einbaulage des Gurtaufrollers die Verwendung einer herkömmlichen Steuerscheibe möglich ist, ohne einen vergrößerter Bauraum oder ein verschlechtertes Ansprechverhalten in Kauf nehmen zu müssen.

Beim erfindungsgemäßen Trägheitssensor ist der Neigungswinkel der Schwenkachse des Sensorhebels etwa halb so groß wie der Neigungswinkel der Ebene der Steuerscheibe gegenüber einer zur Bezugsebene senkrechten Ebene. Damit kann ein mit dem erfindungsgemäßen Trägheitssensor versehener Gurtaufroller stärker geneigt im Fahrzeug eingebaut sein als bei Verwendung des bekannten Trägheitssensors. Der Neigungswinkel der Steuerscheibe kann 45° und mehr betragen. Dadurch wird auch die Reibung zwischen der Kugeloberfläche und der Auflagefläche des Sensorhebels nicht zu hoch.

Eine Ausführungsform der Erfindung ist in der beigefügten Zeichnung dargestellt. In der Zeichnung zeigen:
Fig. 1 schematisch den Trägheitssensor in einer Stirnansicht auf eine gegenüber der Vertikalen stark geneigte Steuerscheibe;
Fig. 2 eine schematische Seitenansicht eines herkömmlichen Trägheitssensors im Zusammenwirken mit einer Steuerscheibe;
Fig. 3 eine Stirnansicht eines herkömmlichen Trägheitssensors bei senkrechter Ausrichtung der Steuerscheibe;
Fig. 4 eine Stirnansicht eines herkömmlichen Trägheitssensors mit einer stark geneigten Steuerscheibe; und
Fig. 5 eine Stirnansicht eines herkömmlichen Trägheitssensors mit einer Spezialausführung einer Steuerscheibe.

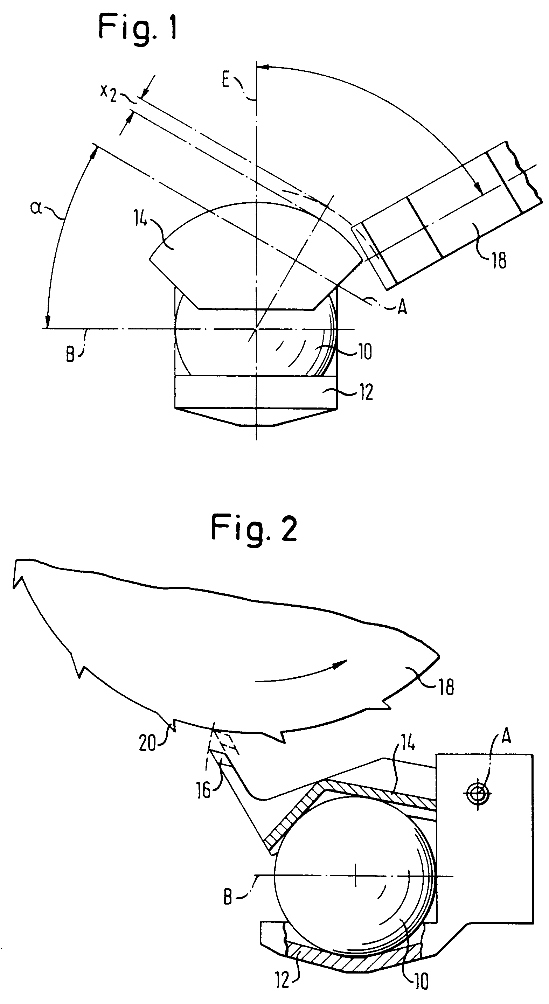

Bei der in Fig. 1 gezeigten, erfindungsgemäßen Ausbildung des Trägheitssensors ruht eine Kugel 10 aus Metall in einer am Gehäuse eines (nicht gezeigten) Gurtaufrollers befestigten Schale 12, die parallel zu einer horizontalen Bezugsebene B ausgerichtet ist. An der Oberseite der Kugel 10 liegt ein Sensorhebel 14 auf, der an seinem einen Ende um eine gehäusefeste Achse A schwenkbar gelagert ist und an seinem anderen, freien Ende eine Steuerklinke 16 trägt. Die Spitze der Steuerklinke 16 befindet sich im Ruhezustand des Trägheitssensors in geringem Abstand vom Umfang einer Steuerscheibe 18, deren Außenverzahnung durch in Umfangsrichtung beabstandet, spitze Steuerzähne 20 gebildet ist.

Die Ebene der Steuerscheibe 18 ist gegenüber einer zur Bezugsebene B senkrechten Ebene E um einen relativ großen Winkel von mehr als 45° geneigt. Im gleichen Sinne ist auch die Schwenkachse A des Sensorhebels geneigt. Der Neigungswinkel der Schwenkachse A gegenüber der Bezugsebene B ist in Fig. 1 mit α bezeichnet. Er ist etwa halb so groß wie der Neigungswinkel der Ebene der Steuerscheibe 18 gegenüber der Ebene E.

Zur Erläuterung der Funktionsweise des erfindungsgemäßen Trägheitssensors wird nun auf die Fig. 2 bis 5 Bezug genommen, welche die eingangs geschilderte Problematik bei einem herkömmlichen Trägheitssensor veranschaulichen.

In Fig. 2 ist die Schwenkachse A des Sensorhebels 14 parallel zur Bezugsebene B angeordnet. Der durch Bewegung der Kugel 10 in der Schale 12 ausgelöste Hub des Sensorhebels 14 und folglich der Steuerklinke 16 bringt diese in die Bewegungsbahn der Steuerzähne 16 an der Steuerscheibe 18, wodurch deren Drehung (Pfeil in Fig. 2) angehalten wird. Die Relativdrehung zwischen Steuerscheibe 18 und Gurtspule führt in bekannter Weise zur Aktivierung des Sperrmechanismus am Gurtaufroller.

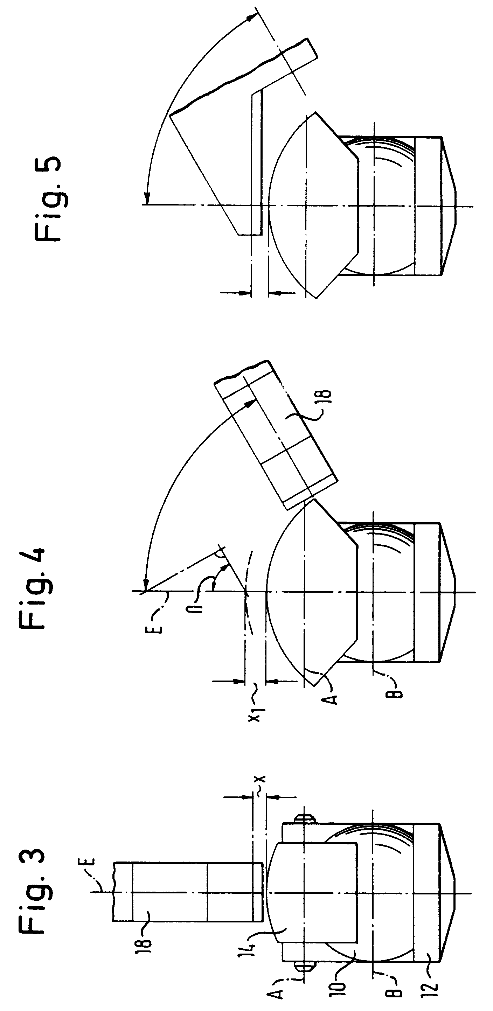

Fig. 3 zeigt die herkömmliche senkrechte Anordnung der Steuerscheibe 18 bei horizontaler Orientierung der Schwenkachse A des Sensorhebels 14. Der Hub der Steuerklinke für den Eingriff in die Außenverzahnung der Steuerscheibe 18 ist mit x bezeichnet.

Wenn hingegen, wie in Fig. 4 gezeigt, die Steuerscheibe 18 stark gegenüber der zur Bezugsebene B senkrechten Ebene E geneigt wird, beispielsweise um mehr als 45°, ist ein stark vergrößerter Hub x₁ der Steuerklinke erforderlich, um mit der Außenverzahnung der Steuerscheibe 18 in Eingriff zu gelangen. Wie mit einfachen geometrischen Überlegungen gezeigt werden kann, verhält sich die zur Ebene der Steuerscheibe 18 parallele Hubkomponente zu der in der senkrechten Ebene E liegenden Hubkomponente der Steuerklinke wie der Kosinus des Winkels β zwischen dieser senkrechten Ebene E und der Ebene der Steuerscheibe 18. Der erforderliche Hub x₁ ist also deutlich größer als der Hub x bei senkrechter Orientierung der Steuerscheibe 18.

Um eine Vergrößerung des benötigten Hubes der Steuerklinke zu vermeiden, kann die Steuerscheibe an ihrem Außenumfang mit einer speziellen Verzahnung versehen werden, die parallel zur Bezugsebene B ausgerichtet ist, wie in Fig. 5 veranschaulicht. Dies erfordert jedoch, wie eingangs erörtert, spezielle Ausführungen der Steuerscheibe.

Vergleicht man nun die in Fig. 1 gezeigte Ausbildung des Trägheitssensors mit der in Fig. 4 gezeigten Situation, so wird deutlich, daß durch die geneigte Orientierung der Schwenkachse A des Sensorhebels 14 dessen für die Einsteuerung der Steuerklinke in die Außenverzahnung der Steuerscheibe 18 benötigter Hub x₂ deutlich verkleinert wird. Prinzipiell läßt sich durch den Rampeneffekt zwischen der Oberfläche der Kugel 10 und dem darauf aufliegenden Teil des Sensorhebels 14 ein Hub erzielen, der nicht größer ist als bei senkrechter Anordnung der Steuerscheibe 18 (Fig. 3); da jedoch durch die Neigung der Schwenkachse des Sensorhebels zusätzliche Reibung zwischen dessen Auflageteil und der Oberfläche der Kugel auftritt, muß ein günstiger Kompromiß angestrebt werden, der durch das angegebene Neigungswinkelverhältnis erzielt worden ist.

## Patentansprüche

1. Trägheitssensor für die fahrzeugsensitive Auslösung eines Sperrmechanismus an einem Gurtaufroller, mit einer Kugel (10), die in einer nach einer Bezugsebene (B) ausgerichteten Schale (12) gelagert ist, und mit einem auf der Kugel (10) aufliegenden, schwenkbar gelagerten Sensorhebel (14), an dessen freiem Ende eine Steuerklinke (16) gebildet ist und der mit einer außenverzahnten Steuerscheibe (18) des Gurtaufrollers zusammenwirkt, wobei die Schwenkachse (A) des Sensorhebels (14) gegen die Bezugsebene (B) im gleichen Sinne wie die Ebene der Steuerscheibe (18) geneigt ist, dadurch gekennzeichnet, daß der Neigungswinkel der Schwenkachse (A) des Sensorhebels (14) etwa halb so groß ist wie der Neigungswinkel der Ebene der Steuerscheibe (18) gegenüber einer zur Bezugsebene (B) senkrechten Ebene (E).

## Claims

1. An inertial sensor for vehicle sensitive triggering of a blocking mechanism on a belt retractor, comprising a ball (10) seated in a socket (12) aligned in relation to a reference plane (B), and a sensor lever (14) which is pivotally mounted and bears on the ball (10), the sensor lever having its free end formed as a control pawl (16) and cooperating with an externally toothed control disk (18) of the belt retractor, the pivot axis (A) of the sensor lever (14) being inclined in relation to the reference plane (B) in the same direction as the plane of the control disk (18), characterized in that the inclination angle of the pivot axis (A) of the sensor lever (14) is approximately half of the inclination angle of the plane of the control disk (18) in relation to a plane (E) perpendicular to the reference plane (B).

## Revendications

1. Détecteur d'inertie pour le déclenchement d'un mécanisme de blocage, sensible aux mouvements du véhicule, monté sur un enrouleur de ceinture de sécurité, avec une bille (10), qui est montée dans une cuvette (12) tournée vers un plan de référence (B), et avec un levier de détecteur (14) reposant sur la bille (10), monté de façon à pouvoir pivoter, levier à l'extrémité libre duquel est constitué un cliquet de commande (16), et qui coopère avec un disque de commande (18) denté extérieurement, de l'enrouleur de la ceinture de sécurité, l'axe de pivotement (A) du levier du détecteur (14) étant incliné par rapport au plan de référence (B) dans le même sens que le plan du disque de commande (18), caractérisé en ce que l'angle d'inclinaison de l'axe de pivotement (A) du levier de détecteur (14) est à peu près moitié moins grand que l'angle d'inclinaison du plan du disque de commande (18) par rapport à un plan (E) perpendiculaire au plan de référence (B).
